Europäisches Patentamt

European Patent Office (11) Numéro de publication: **0 190 954**

Office européen des brevets **B1**

(19)

(12) # FASCICULE DE BREVET EUROPÉEN

(45) Date de publication du fascicule du brevet: (51) Int. Cl.⁴: **F 22 B 1/28,** F 24 C 7/00
02.11.88

(21) Numéro de dépôt: **86400074.0**

(22) Date de dépôt: **15.01.86**

(54) Dispositif pour produire de la vapeur d'eau et four de cuisson comportant un tel dispositif.

(30) Priorité: **25.01.85 FR 8501053**

(43) Date de publication de la demande:
**13.08.86 Bulletin 86/33**

(45) Mention de la délivrance du brevet:
**02.11.88 Bulletin 88/44**

(84) Etats contractants désignés:
**AT BE DE FR GB IT LU NL**

(56) Documents cité:
**US-A-2 668 993**
**US-A-3 639 725**
**US-A-3 672 568**
**US-A-4 419 302**

(73) Titulaire: **SEB S.A., F-21260 Selongey (FR)**

(72) Inventeur: **Rosset, Roger, Aux Marnaz Balvé Bloye,**
**F-74150 Rumilly (FR)**
Inventeur: **Mayeur, Jacques, 7 rue du Cep, F-74600**
**Seynod (FR)**

(74) Mandataire: **Bouju, André, Cabinet Bouju 38**
**avenue de la Grande Armée, F-75017 Paris (FR)**

LIBER, STOCKHOLM 1988

EP 0 190 954 B1

## Description

La présente invention concerne un dispositif pour produire de la vapeur d'eau.

L'invention vise notamment un four électrique pour la cuisson des aliments, comprenant un tel dispositif pour produire de la vapeur d'eau.

On sait qu'il est intéressant de pouvoir produire de la vapeur d'eau à l'intérieur d'un four de cuisson pour augmenter l'homogénéité de la température à l'intérieur de ce four et pour éviter le dessèchement des aliments et améliorer les échanges thermiques.

Divers dispositifs ont été proposés pour produire de la vapeur d'eau à l'intérieur d'un four de cuisson. Ceux-ci comprennent généralement un réservoir d'eau placé en contact avec les résistances chauffantes qui sont disposées près du fond du four.

La vapeur d'eau est ainsi produite par ébullition de l'eau ou par pulvérisation d'eau sur une plaque portée à haute température.

Les inconvénients de ces dispositifs de production de vapeur d'eau résident dans le fait que l'eau portée à ébullition s'évapore très rapidement, de sorte qu'il est nécessaire de remplir fréquemment le réservoir, et qu'il est difficile de contrôler le débit de vapeur formé.

On connaît selon le US-A-4 419 302 un dispositif pour produire de la vapeur d'eau, comprenant un élément chauffant et un réservoir d'eau. L'élément chauffant est placé au-dessus de l'eau contenue dans le réservoir. Deux tôles légèrement espacées sont disposées en contact avec l'élément chauffant et plongent dans l'eau du réservoir. La vapeur formée par ce dispositif s'échappe dans une chambre de vaporisation par des ouvertures ménagées dans les tôles tout autour de l'élément chauffant. Le débit de la vapeur est réglé en envoyant un gaz dans la chambre de vaporisation. Etant donné que la vapeur s'échappe par une multitude de trous ménagés tout autour de l'élément chauffant et que le gaz introduit dans la chambre de vaporisation tend à refroidir la vapeur, cette dernière n'est pas produite à une température très élevée.

De plus, le fait que ce dispositif nécessite un débit de gaz le rend complexe et coûteux.

Le but de la présente invention est de créer un dispositif permettant de créer de la vapeur à température élevée, ne nécessitant aucun débit additionnel de gaz et dont la réalisation est simple et économique.

Le dispositif visé par l'invention pout produire de la vapeur d'eau, comprend un élément chaffant et un réservoir d'eau, l'élément chauffant étant placé au-dessus de l'eau contenue dans le réservoir, et deux tôles légèrement espacées l'une de l'autre et étant disposées en contact avec l'élément chauffant et plongeant dans l'eau du réservoir, est caractérisé en ce que les deux tôles sont métalliques et espacées de façon à définir entre elles un espace capillaire, et en ce que l'une des tôles présente au moins une ouverture placée à proximité de l'élément chauffant.

La demanderesse a constaté de façon surprenante que lorsque l'élément chauffant est chaud, de la vapeur d'eau relativement sèche s'échappe par l'ouverture ménagée sur l'une des tôles près de l'élément chauffant.

Etant donné que la vapeur est chauffée au contact de l'élément chauffant avant de s'échapper par l'ouverture, cette vapeur a une température très élevée.

L'émission de cette vapeur s'effectue sans introduction de gaz additionnel et sans entraîner l'ébullition de l'eau contenue dans le réservoir, étant donné que celui-ci n'est pas en contact direct avec l'élément chauffant, le seul contact entre celui-ci et l'eau contenue dans le réservoir étant constitué par les deux tôles qui plongent dans cette eau.

On peut régler le débit de la vapeur en agissant sur les paramètres suivants distance comprise entre les deux tôles, conductibilité de la chaleur plus ou moins grande de ces toles, distance comprise entre l'élément chauffant et l'eau et puissance de chauffage de l'élément chauffant.

La distance comprise entre les deux tôles est généralement égale à quelques dixièmes de millimètres.

De préférence, la distance comprise entre l'élément chauffant et le niveau de l'eau, la nature des tôles et les dimensions de l'espace capillaire sont telles que la vapeur s'échappant de l'ouverture ménagée près de l'élément chauffant soit surchauffée à une température au moins égale à 160°C. La vapeur d'eau ainsi formée accélère considérablement la cuisson.

L'invention vise également un four pour la cuisson des aliments, comprenant un dispositif de production de vapeur conforme à l'invention.

Suivant cet aspect de l'invention, le four comprenant une résistance électrique tubulaire comportant deux brins parallèles au fond du four comporte un réservoir d'eau en tôle métallique disposé entre les deux brins de cette résistance, ce réservoir comprenant deux rebords ménagés respectivement sur deux parois latérales opposées de ce réservoir, ces rebords recouvrant chacun les deux brins parallèles de la résistance, ce réservoir d'eau étant fermé par un couvercle en tôle métallique engagé à l'intérieur de ce réservoir et présentant des parois latérales légèrement espacées des parois latérales du réservoir et plongeant dans l'eau du réservoir, de façon à créer entre ces parois, un espace capillaire ouvert vers l'extérieur, dans la zone comprise entre les deux rebords et le bord adjacent du fond du couvercle.

La vapeur d'eau s'échappe par les fentes définies entre les rebords du réservoir et le bord adjacent du fond du couvercle.

Grâce à cette disposition, le dispositif de production de vapeur n encombre pas l'intérieur du four. Par ailleurs, la disposition des fentes d'échappement de la vapeur le long des résistances, permet une excellente répartition de

la vapeur à l'intérieur du four, ce qui permet une plus grande homogénéité de la répartition de la température à l'intérieur du four et donc une meilleure cuisson des aliments.

D'autres particularités et avantages de l'invention apparaîtront encore dans la description ci-après.

Aux dessins annexés, donnés à titre d'exemples non limitatifs :

- la figure 1 est une vue en coupe perpendiculaire à l'élément chauffant, d'une première réalisation d'un dispositif conforme à l'invention,
- la figure 2 est une vue de dessus du dispositif,
- la figure 3 est une vue en coupe longitudinale d'un four de cuisson équipé d'un dispositif conforme à l'invention,
- la figure 4 est une vue de dessus du four, après enlèvement de sa partie supérieure,
- la figure 5 est une vue en coupe, à échelle agrandie suivant le plan V-V de la figure 4,
- la figure 6 est une vue de dessus du dispositif représenté sur la figure 5,
- la figure 7 est une vue analogue aux figures 1 et 5, concernant une variante de réalisation,
- la figure 8 est une vue de dessus du dispositif représenté sur la figure 7,
la figure 9 est une vue en coupe longitudinale perpendiculaire à celle de la figure 5, montrant une variante de réalisation,
- la figure 10 est une vue en coupe suivant le plan X-X de la figure 9.

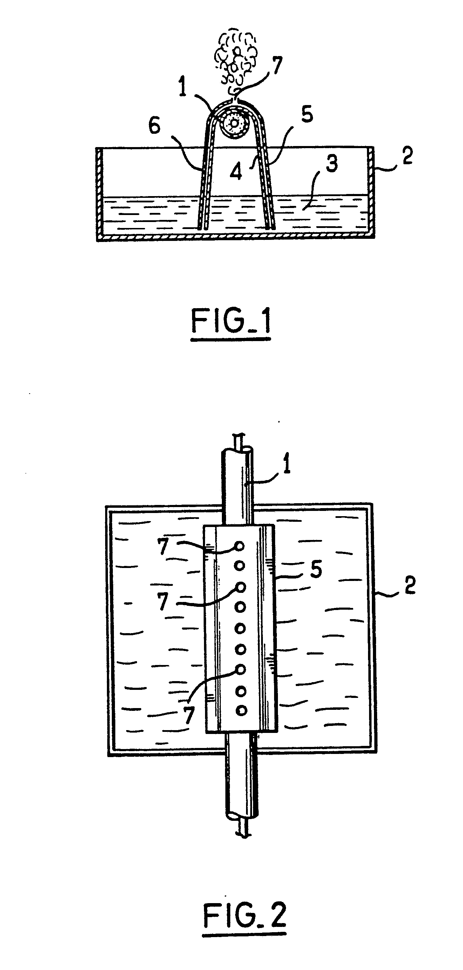

Dans la réalisation des figures 1 et 2, le dispositif pour produire de la vapeur d'eau comprend un élément chauffant 1 constitué par une résistance électrique tubulaire et un réservoir 2 contenant de l'eau 3.

L'élément chauffant 1 est placé au-dessus de l'eau 3 contenue dans le réservoir 2. Deux tôles métalliques 4, 5 légèrement espacées l'une de l'autre de façon à définir entre elles un espace capillaire 6, sont disposées en contact avec l'élément chauffant 1 et plongent dans l'eau 3 du réservoir 2.

La tôle 5 présente des ouvertures 7 placées juste au-dessus de l'élément chauffant 1.

La distance comprise entre les deux tôles 4, 5 est égale à quelques dixièmes de millimètre. Ces tôles 4, 5 sont réalisées par exemple en acier inoxydable.

Dans l'exemple représenté sur les figures 1 et 2, les deux tôles 4, 5 sont pliées en U et recouvrent l'élément chauffant 1 de façon que la base du U soit en contact avec l'élément chauffant 1 et que les deux ailes du U formé par les deux tôles, plongent dans l'eau 3 du réservoir 2. Par ailleurs, les ouvertures 7 sont ménagées sur la tôle extérieure 5 suivant une ligne située au-dessus de l'élément chauffant 1, dans un plan vertical passant par l'axe de cet élément.

Le fonctionnement de ce dispositif est le suivant.

Du fait de l'espace très mince compris entre les deux tôles 4, 5, l'eau 3 tende à monter dans cet espace, par effet de capillarité et de pompage thermique.

Dès que cette eau atteint une zone où la température est égale à celle de l'ébullition, l'eau se vaporise en s'échappant des ouvertures 7.

Les essais ont montré que la distance entre la résistance 1 et le niveau de l'eau pouvait atteindre 60 mm.

L'eau contenue dans le réservoir n'entre en aucun cas en ébullition, car la tôle 4, 5 de faible épaisseur (moins de 1 mm) réalise avec l'eau un contact thermique insuffisant pour engendrer l'ébullition de cette eau.

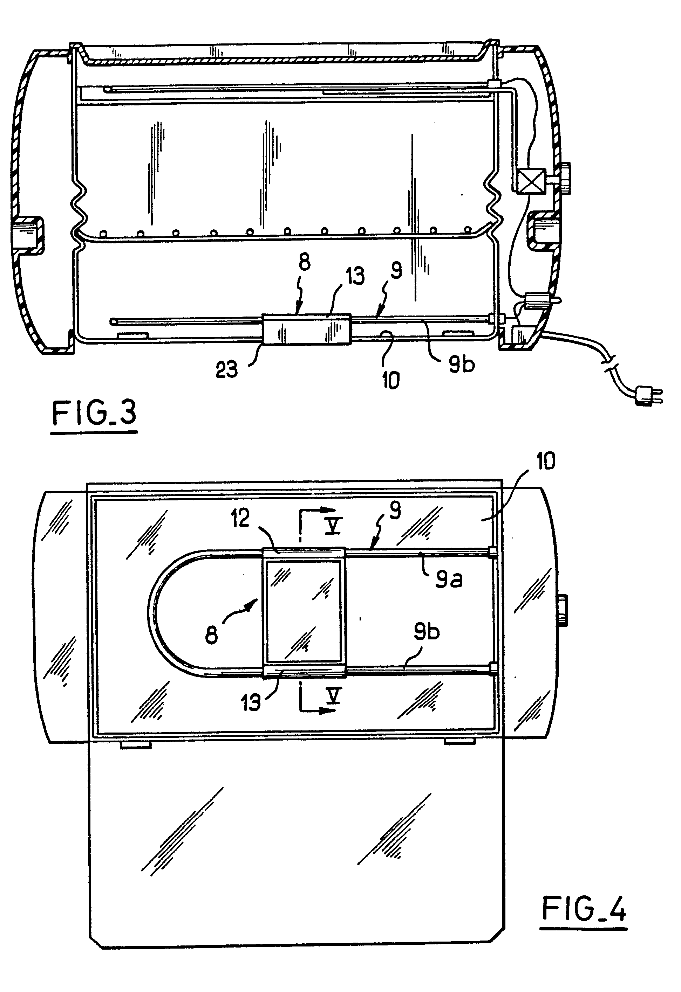

Dans la réalisation des figures 3 et 4, on a représenté un four électrique pour la cuisson des aliments, comprenant un dispositif 8 de production de vapeur conforme à l'invention.

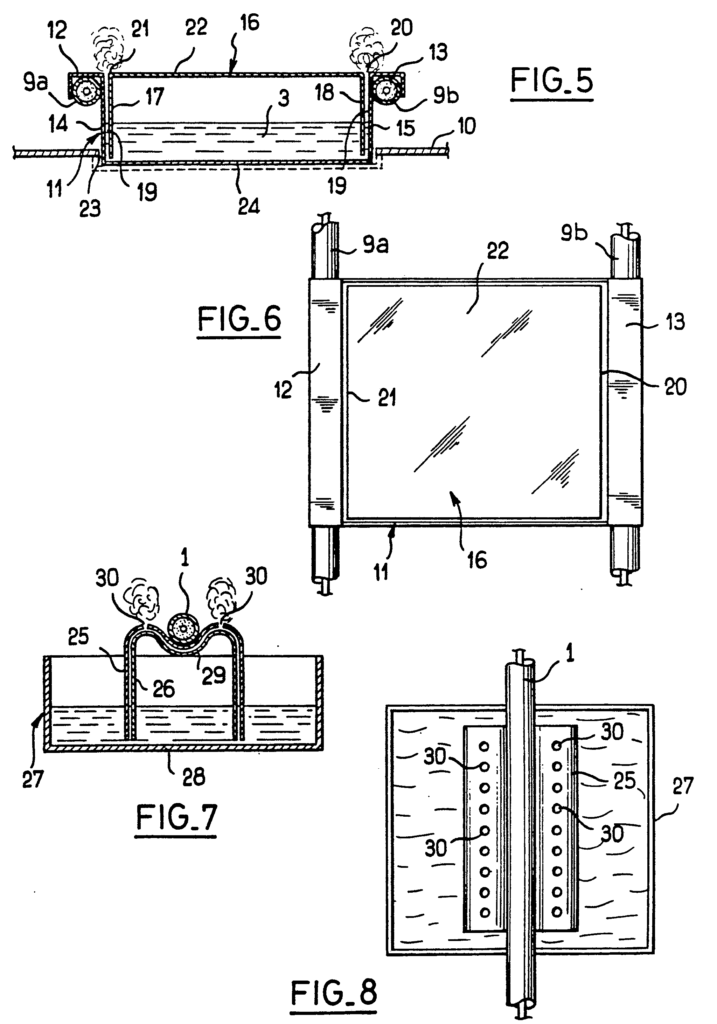

Ce four comprend une résistance électrique tubulaire 9, comportant deux brins 9a, 9b parallèles au fond 10 du four. On voit sur les figures 5 et 6 qu'un réservoir d'eau 11 en tole métallique est placé entre les deux brins 9a, 9b de cette résistance 9.

Ce réservoir 11 comprend à cet effet deux rebords 12, 13 ménagés respectivement sur deux parois latérales 14, 15 opposées de ce réservoir, ces rebords 12, 13 recouvrant chacun les deux brins parallèles 9a, 9b de la résistance 9. Le réservoir 11 est fermé par un couvercle 16 également en tôle mince présentant des parois latérales 17, 18 légèrement espacées des parois latérales 14, 15 du réservoir 11 et plongeant dans l'eau de ce réservoir, de façon à créer entre elles un espace capillaire 19 ouvert vers l'extérieur par une fente 20 comprise entre les deux rebords 12, 13 et le bord adjacent 21 du fond 22 du couvercle 16.

Par ailleurs, le réservoir 11 est engagé dans une ouverture 23 ménagée dans le fond 10 du four, de sorte que le fond 24 du réservoir 11 est en contact avec l'extérieur du four ou le réservoir 11 est en contact avec la paroi extérieure du four (voir pointillés sur la figure 5).

Le fonctionnement de ce dispositif est identique à celui représenté sur les figures 1 et 2.

Lorsque la résistance 9 est chaude, l'eau ayant monté dans l'espace capillaire 19 se vaporise et s'échappe par les fentes 20 placées le long des brins de résistance 9a, 9b.

La vapeur d'eau sortant des fentes est surchauffée à une température variant entre 160 et 200° C suivant la distance comprise entre l'élément chauffant et le niveau de l'eau contenue dans le réservoir.

L'eau contenue dans le réservoir 11 ne risque pas de bouillir car la chaleur dégagée par la résistance 9 n'est pas directement transmise à l'eau contenue dans le réservoir et de plus, cette eau est refroidie par le fond 24 du réservoir qui est en contact avec l'extérieur du four.

La demanderesse a montré qu'on pouvait ajouter à l'eau contenue dans le réservoir 11 des aromates (herbes ou alcools) qui parfument la vapeur produite par le dispositif, sans nuire à son fonctionnement.

Le dispositif conforme à l'invention présente en outre l'avantage d'être de réalisation très simple, d'être facile à nettoyer, et de pouvoir être enlevé du four et remis en place dans celui-ci très facilement.

Dans la variante représentée sur les figures 7 et 8, le dispositif de production de vapeur comprend également deux tôles métalliques 25, 26 pliées en U et légèrement espacées l'une de l'autre. Les parois latérales de ces tôles 25, 26 plongent dans l'eau 3 du réservoir 27 et leurs extrémités sont en contact avec le fond 28 de celui-ci, qui sert de support à ces tôles.

La base du U formé par les tôles 25, 26 comporte une gorge 29 dirigée vers le fond 28 du réservoir 27 qui épouse partiellement le contour de la résistance 1. Deux séries d'ouvertures 30 sont ménagées sur la tôle extérieure 25 suivant deux lignes parallèles à la résistance 1 situées de part et autre de la gorge 29.

Le fonctionnement de ce dispositif est identique à celui des réalisations précédentes.

Bien entendu, l'invention n'est pas limitée aux exemples de réalisation que l'on vient de décrire et on peut apporter à ceux-ci de nombreuses modifications sans sortir du cadre de l'invention.

Ainsi, la tôle utilisée pour réaliser le dispositif conforme à l'invention peut être en métal ou alliage autre que l'acier inoxydable, pourvu que cette matière résiste à l'action prolongée de la température, de l'eau et de la vapeur et que sa conductibilité thermique ne soit ni trop forte, ni trop faible. On peut également agir sur l'état de surface du métal (sablage ou satinage par exemple) afin de faire varier le débit d'eau.

Le dispositif de production de vapeur conforme à l'invention peut, bien entendu, être également utilisé dans d'autres applications que les fours, telles que les appareils de production de vapeur pour les soins du visage et les humidificateurs de l'air ambiant.

L'espace compris entre les deux tôles métalliques peut être réglé avec précision en disposant entre celles-ci des cales de faible épaisseur ou en pratiquant sur l'une des tôles des ondulations de faible amplitude.

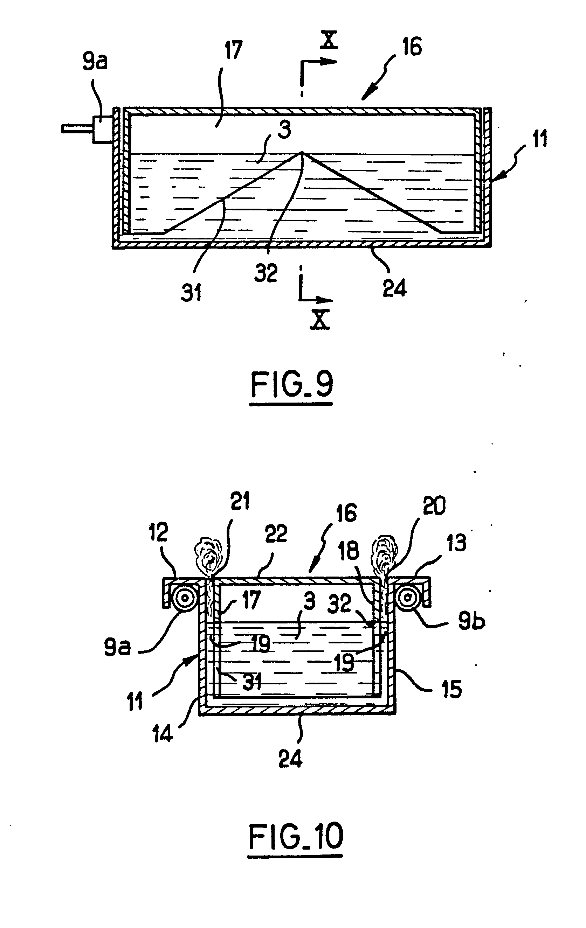

Par ailleurs, dans le dispositif représenté sur les figures 9 et 10, on a prévu des moyens permettant de faire varier le débit de vapeur entre le début et la fin de la cuisson, c'est-à-dire entre le moment où le récipient 11 est plein et où celui-ci est presque vide. A cet effet, on a prévu sur les parcis latérales 17, 18, une échancrure 31 en forme de V inversé, c'est-à-dire évasée vers le bas, le sommet 32 de cette échancrure 31 étant situé près du niveau maximal de l'eau contenue dans le réservoir 31. Grâce à cette échancrure 31, on constate que le débit de vapeur sortant en 20 et 21 est maximum au début de la cuisson puis diminue progressivement au fur et à mesure que le niveau d'eau baisse dans le récipient. On peut ainsi programmer le débit de la vapeur en fonction du temps de cuisson.

Bien entendu, une telle échancrure pourrait également être ménagée sur les parois 26 du dispositif représenté sur la figure 7.

## Revendications

1. Dispositif pour produire de la vapeur d'eau, comprenant un élément chauffant (1, 9) et un réservoir d'eau (2, 11, 27), l'élément chauffant étant placé au-dessus de l'eau (3) contenue dans le réservoir, et deux tôles (4, 5; 14, 17; 25, 26) légèrement espacées l'une de l'autre et étant disposées en contact avec l'élément chauffant et plongeant dans l'eau (3) du réservoir, caractérisé en ce que les deux tôles sont métalliques et espacées de façon à définir entre elles un espace capillaire en ce que l'une des tôles présente au moins une ouverture (7, 20, 30) placée à proximité de l'élément chauffant.

2. Dispositif conforme à la revendication 1, caractérisé en ce que la distance comprise entre l'élément chauffant (1, 9) et le niveau de l'eau, la nature des tôles (4, 5 ; 14, 17 ; 25, 26) et les dimensions de l'espace capillaire sont telles que la vapeur s'échappent de l'ouverture (7, 20, 30) soit surchauffée.

3. Dispositif conforme à l'une des revendications 1 ou 2, caractérisé en ce que la distance comprise entre les deux tôles (4, 5; 14,) 17; 25, 26) est égale à quelques dixièmes de millimètre.

4. Dispositif conforme à l'une des revendications 1 à 3, caractérisé en ce que les deux tôles (4, 5) sont pliées en U et recouvrent l'élément chauffant (1) de façon que la base du U soit en contact avec l'élément chauffant et que les deux ailes du U plongent dans l'eau (3) du réservoir (2), plusieurs ouvertures (7) étant ménagées sur la tôle extérieure (5) suivant une ligne située au-dessus de l'élément chauffant (1).

5. Dispositif conforme à l'une des revendications 1 à 4, caractérisé en ce que les deux tôles (4, 5; 14, 17; 25, 26) sont en acier inoxydable.

6. Four électrique pour la cuisson des aliments, comprenant un dispositif conforme à l'une des revendications 1 à 5.

7. Four conforme à la revendication 6, comprenant une résistance électrique tubulaire (9) comportant deux brins (9a, 9b) parallèles au fond (10) du four, caractérisé en ce qu'un réservoir (11) d'eau en tôle métallique est disposé entre les deux brins (9a, 9b) de cette résistance (9), ce réservoir comprenant deux rebords (12, 13) ménagés respectivement sur deux parois latérales (14, 15) opposées de ce réservoir, ces rebords (12, 13) recouvrant chacun des deux brins (9a, 9b) de la résistance, ce réservoir étant fermé par un couvercle (16) en tôle métallique, engagé à l'intérieur de celui-ci et présentant des parois latérales (17, 18) légèrement espacées des parois latérales (14, 15) du réservoir (11) et plongeant dans l'eau (3) du réservoir, de façon à créer entre elles, un espace capillaire (19) ouvert vers l'extérieur dans la zone (20) comprise entre les deux rebords (12, 13) et le bord (21) du fond (22) du couvercle (16).

8. Four électrique conforme à la revendication 6, caractérisé en ce que le dispositif comprend deux tôles métalliques (25, 26) pliées en U et légèrement espacées, les parois latérales de ces tôles plongeant dans l'eau (3) du réservoir (27) et étant en contact avec le fond (28) de celui-ci, la base du U comportant une gorge (29) dirigée vers le fond (28) du réservoir et épousant le contour de la résistance (1), deux séries d'ouvertures (30) étant ménagées sur la tôle extérieure (25) suivant deux lignes parallèles à la résistance (1) et situées de part et d'autre de la gorge (29).

9. Four électrique conforme à l'une des revendications 7 ou 8, caractérisé en ce que les tôles métalliques (17, 18; 26) présentent une échancrure (31) évasée vers le bas.


**Patentansprüche**

1. Vorrichtung zur Erzeugung von Wasserdampf, mit einem Heizelement (1, 9) und einem Wasserbehälter (2, 11, 27), wobei das Heizelement oberhalb des in dem Behälter enthaltenen Wassers (3) angeordnet ist, so wie mit zwei Blechen (4, 5; 14, 17; 25, 26), die geringfügig voneinander beabstandet sind und in Berührung mit dem Heizelement angeordnet und in das Wasser (3) des Behälters eingetaucht sind, dadurch gekennzeichnet, daß die zwei Bleche aus Metall bestehen und voneinander derart beabstandet sind, daß sie zwischen sich einen Kapillarraum begrenzen, und daß eines der Bleche wenigstens eine Öffnung (7, 20, 30) aufweist, die in der Nähe des Heizelementes angeordnet ist.

2. Vorrichtung nach Anspruch 1, dadurch gekennzeichnet, daß der Abstand zwischen dem Heizelement (1, 9) und dem Wasserspiegel, die Art der Bleche (4, 5; 14, 17; 25, 26) und die Abmessungen des Kapillarraumes derart sind, daß der aus der Öffnung (7, 20, 30) austretende Dampf überhitzt ist.

3. Vorrichtung nach Anspruch 1 oder 2, dadurch gekennzeichnet, daß der Abstand zwischen den zwei Blechen (4, 5; 14, 17; 25, 26) gleich einigen Zehntelmillimetern ist.

4. Vorrichtung nach einem der Ansprüche 1 bis 3, dadurch gekennzeichnet, daß die zwei Bleche (4, 5) U-förmig gebogen sind und das Heizelement (1) derart abdecken, daß die Basis des U sich in Berührung mit dem Heizelement befindet und die beiden Flügel des U in das Wasser (3) des Behälters (2) eingetaucht sind, wobei mehrere Öffnungen (7) an dem äußeren Blech (5) entlang einer Linie angebracht sind, welche oberhalb des Heizelementes (1) liegt.

5. Vorrichtung nach einem der Ansprüche 1 bis 4, dadurch gekennzeichnet, daß die zwei Bleche (4, 5; 14, 17; 25, 26) aus rostfreiem Stahl bestehen.

6. Elektrischer Ofen zum Garen von Speisen, mit einer Vorrichtung nach einem der Ansprüche 1 bis 5.

7. Ofen nach Anspruch 6, mit einem rohrförmigen elektrischen Widerstand (9), der zwei zum Boden (10) des Ofens parallele Zweige (9a, 9b) aufweist, dadurch gekennzeichnet, daß zwischen den beiden Zweigen (9a, 9b) dieses Widerstandes (9) ein Wasserbehälter (11) aus Metallblech angeordnet ist, der zwei Ränder (12, 13) aufweist, die jeweils an der einen bzw. anderen zweier einander gegenüberliegender Seitenwände (14, 15) dieses Behälters angebracht sind, wobei diese Ränder (12, 13) jeweils einen der zwei Zweige (9a, 9b) des Widerstandes abdecken, und wobei dieser Behälter durch einen Deckel (16) aus Metallblech geschlossen ist, der in sein Inneres eingesetzt ist und Seitenwände (17, 18) aufweist, welche geringfügig von den Seitenwänden (14, 15) des Behälters (11) beabstandet und in das Wasser (3) des Behälters eingetaucht sind, sodaß zwischen ihnen ein Kapillarraum (19) erzeugt wird, welcher in der Zone (20), die zwischen den beiden Rändern (12, 13) und dem Rand (21) des Bodens (22) des Deckels (16) enthalten ist, zur Außenseite hin offen ist.

8. Elektrischer Ofen nach Anspruch 6, dadurch gekennzeichnet, daß die Vorrichtung zwei Metallbleche (25, 26) umfaßt, die U-förmig gebogen und geringfügig voneinander beabstandet sind, wobei die Seitenwände dieser Bleche in das Wasser (3) des Behälters (27) eingetaucht sind und in Berührung mit dem Boden (28) desselben stehen, wobei die Basis des U eine gegen den Boden (28) des Behälters gerichtete Rille (29) aufweist, welche an die Kontur des Widerstandes (1) angeschmiegt ist, wobei an dem äußeren Blech (25) zwei Reihen von Öffnungen (30) längs zweier zu dem Widerstand (1) paralleler und beidseits der Rille (29) angeordneter Linien angebracht sind.

9. Elektrischer Ofen nach Anspruch 7 oder 8, dadurch gekennzeichnet, daß die Metallbleche (17, 18; 26) einen sich nach unten erweiternden Ausschnitt (31) aufweisen.


**Claims**

1. A steam-raising apparatus comprising: a heating element (1, 9) and a water tank (2, 11, 27), the heating element being disposed above the water (3) in the tank; and two members (4, 5; 14, 17; 25, 26) which are made of sheet material, are narrowly spaced apart from one another, are in contact with the heating element and dip into the water (3) in the tank, characterised in that the two sheet members are made of metal and are so spaced apart from one another as to bound a capillary gap and one of the sheet members is formed with at least one aperture (7, 20, 30) near the heating element.

2. An apparatus according to claim 1, characterised in that the gap between the heating element (1, 9) and the water level, the nature of the sheet members (4, 5; 14, 17; 25, 26) and the dimensions of the capillary gap are such that the steam issuing from the aperture (7, 20, 30) is superheated.

3. An apparatus according to claim 1 or 2, characterised in that the gap between the two sheet members (4, 5; 14, 17; 25, 26) is a few tenths of a millimetre.

4. An apparatus according to any of claims 1 - 3, characterised in that the two sheet members (4, 5) are bent into a U-shape and so extend around the heating element (1) that the base of the U is in contact with the heating element and the two arms of the U dip into the water (3) in the tank (2), the outer sheet member (5) being formed with a number of apertures (7) disposed in along a line above the heating element (1).

5. An apparatus according to any of claims 1 - 4, characterised in that the two sheet members (4, 5; 14, 17; 25, 26) are made of stainless steel.

6. An electric oven for cooking food and comprising an apparatus according to any of claims 1 - 5.

7. An oven according to claim 6 comprising a tubular electrical resistance (9) having two runs (9a, 9b) parallel to the oven base (10), characterised in that a sheet metal water tank (11) is disposed between the two runs (9a, 9b) and has two ledges (12, 13) contrived on two opposite side walls (14, 25 respectively) of the tanks, the ledges covering each of the two runs (9a, 9b) of the resistance (9), the tank being closed by a sheet-metal lid (16) which is engaged in the tank and which has side walls (14, 15), the same being at a reduced distance from the tank side walls (14, 15) and dipping into the water (3) to bound a capillary gap (19) which is open to the exterior in the zone (20) bounded by the two ledges (12, 13) and the adjacent edge (21) of the lid base (22).

8. An oven according to claim 6, characterised in that the apparatus comprises U-shaped sheet metal members (25, 26) disposed close to one another, the side walls of such U-shaped members dipping into the water (3) in the tank (27) and making contact with the tank base (28), the base of the U being formed with a dip (29) which extends towards the tank base (28) and intimately follows the contour of the resistance (1), the outer sheet member (25) being formed with two rows of apertures (30) arranged in two lines parallel to the resistance (1) and disposed on either side of the dip (29).

9. An oven according to claim 7 or 8, characterised in that the sheet metal members (17, 18; 26) are formed with a downwardly widening opening (31).

0 190 954

FIG. 1

FIG. 2

1

FIG.3

FIG.4

FIG_5

FIG_6

FIG_7

FIG_8

FIG.9

FIG.10